# FASCICULE DE BREVET EUROPEEN

(11) **EP 4 257 386 B1**
(45) Date de publication et mention de la délivrance du brevet: **29.07.2026**
(21) Numéro de dépôt: 23163185.4
(22) Date de dépôt: 21.03.2023
(51) Int. Cl.: B60J 5/04, B60J 5/06

(54) **CÔTÉ DE CAISSE DE VÉHICULE COMPRENANT UN MOYEN DE RETENUE D'UNE PORTE COULISSANTE EN CAS DE CHOC TRANSVERSAL DEPUIS L HABITACLE VERS L EXTÉRIEUR**
FAHRZEUGKAROSSERIESEITE MIT EINEM MITTEL ZUM HALTEN EINER SCHIEBETÜR BEI EINEM QUERAUFPRALL AUS DEM FAHRZEUGINNENRAUM
VEHICLE BODY SIDE COMPRISING A MEANS FOR RETAINING A SLIDING DOOR IN THE EVENT OF A TRANSVERSE IMPACT FROM THE PASSENGER COMPARTMENT TO THE OUTSIDE

(30) Priorité: 07.04.2022 FR 2203194
(43) Date de publication de la demande: 11.10.2023
(73) Titulaire: Renault s.a.s, 92100 Boulogne Billancourt (FR)
(72) Inventeur: GAILLARD, Philippe, 78150 LE CXHESNAY-ROCQUENCOURT (FR); RAPIOR, Bérénice, 78640 Villiers-Saint-Frédéric (FR)

(56) Documents cités:
- DE-A1- 102008 021 923
- KR-A- 970 026 137
- KR-B1- 100 228 081
- US-A1- 2003 006 625
- US-A1- 2014 077 523

## Description

### Domaine technique de l'invention

L'invention concerne un côté de caisse pour véhicule comprenant une porte coulissante et une porte pivotante. L'invention porte encore sur une caisse comprenant au moins un tel côté de caisse. L'invention porte encore sur un véhicule comprenant une telle caisse ou au moins un tel côté de caisse.

### Etat de la technique antérieure

Un véhicule automobile, en particulier un véhicule familial ou utilitaire, requiert un accès conséquent au sein de l'habitacle et/ou de la zone de chargement afin de faciliter l'entrée et/ou la sortie ou encore le chargement et/ou le déchargement. Un tel véhicule est généralement équipé d'un côté de caisse droit et d'un côté de caisse gauche comprenant chacun une porte latérale arrière coulissante. Chaque côté de caisse comprend généralement une porte avant pivotante.

Désormais, afin de maximiser l'accès au sein de l'habitacle et par conséquent la sortie depuis l'habitacle, on s'affranchit de pied milieu, ou pied B, entre la porte coulissante arrière et la porte pivotante avant d'un même côté de caisse.

A noter qu'une telle porte coulissante doit satisfaire des normes et/ou exigences réglementaires. En effet, l'ouverture intempestive en cas de chocs et/ou en cas d'efforts transversaux provenant de l'intérieur du véhicule sur la porte coulissante doit être évitée, tout du moins limitée. De tels efforts et/ou chocs sur la porte coulissante proviennent par exemple d'un ou plusieurs objets qui basculent et/ou roulent et/ou pivotent et/ou tombent et/ou sont projetés, ou encore de chocs ou efforts dus à des passagers arrière qui subissent des forces de type centrifuge ou des accélérations. De telles situations se produisent lors de virages négociés à vitesse très élevée et/ou d'accélérations et/ou de freinages importants, et a fortiori, en cas d'accident de la route.

L'absence de pied milieu engendre des difficultés pour satisfaire de telles normes et/ou réglementations.

### Présentation de l'invention

Le but de l'invention est de fournir un côté de caisse remédiant aux inconvénients ci-dessus. En particulier, l'invention propose une solution simple à fabriquer et à installer et particulièrement fiable en cas d'effort et/ou choc transversal sur la porte coulissante depuis l'intérieur du véhicule.

### Résumé de l'invention

Pour atteindre cet objectif l'invention porte sur un côté de caisse pour un véhicule, notamment un véhicule automobile, comprenant :
- une porte pivotante, la porte pivotante comprenant des moyens de maintien en position fermée par rapport au côté de caisse,
- une porte coulissante ou sensiblement coulissante selon une direction principale en fin de fermeture,

les portes coulissante et pivotante se jouxtant l'une par rapport à l'autre en position fermée des portes,
la porte pivotante comprenant un moyen de retenue de la porte coulissante,
la porte coulissante comprenant un moyen de coopération avec le moyen de retenue en cas d'effort et/ou en cas de choc transversal sur la porte coulissante depuis l'intérieur d'un tel véhicule vers l'extérieur, le moyen de coopération comprenant une extension s'étendant selon la direction principale ou sensiblement selon la direction principale.

Le moyen de retenue peut comprendre une première échancrure, notamment une première échancrure arrondie.

L'extension peut comprendre un doigt cylindrique ou sensiblement cylindrique muni d'un épaulement au niveau d'une extrémité distale, notamment muni d'un épaulement formé par une tête du doigt.

Le moyen de retenue peut comprendre une première échancrure, notamment une première échancrure arrondie de diamètre inférieur au diamètre de l'épaulement du doigt.

Le moyen de retenue peut comprendre une deuxième échancrure, notamment arrondie, destinée à guider le doigt au sein de la première échancrure en cas d'effort et/ou en cas de choc sur la porte coulissante depuis l'intérieur vers l'extérieur.

La porte coulissante peut comprendre une feuillure pouvant s'étendre sensiblement transversalement et verticalement en position fermée de la porte coulissante et le moyen de coopération peut comprendre une platine de fixation fixée par rapport à la feuillure, la platine de fixation pouvant comprendre une face depuis laquelle peut s'étendre le doigt, la face pouvant s'étendre de manière sensiblement inclinée par rapport à une portion de la platine de fixation fixée à la feuillure.

La porte pivotante peut comprendre une feuillure pouvant s'étendre sensiblement transversalement et verticalement en position fermée de la porte pivotante et le moyen de retenue peut comprendre une patte fixée par rapport à la feuillure, la patte pouvant comprendre une partie plane dans laquelle peut être ménagée la première échancrure, la partie plane pouvant s'étendre transversalement ou sensiblement transversalement et verticalement ou sensiblement verticalement en position fermée de la porte pivotante.

La partie plane de la patte du moyen de retenue et la face de la platine de fixation du moyen de coopération peuvent former un angle, notamment compris entre 20 degrés et 60 degrés en position fermée des portes en l'absence d'effort et/ou de choc dirigé vers l'extérieur sur la porte coulissante.

L'invention porte encore sur une caisse de véhicule, notamment de véhicule automobile, comprenant un côté de caisse tel que défini précédemment du côté droit et/ou du côté gauche.

L'invention porte encore sur un véhicule, notamment un véhicule automobile, comprenant une caisse telle que définie précédemment, ou au moins un côté de caisse tel que défini précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
La figure 1 est une vue schématique d'un véhicule automobile selon un mode de réalisation.
La figure 2 est une vue en perspective d'une porte coulissante d'un côté de caisse du véhicule selon un mode de réalisation.
La figure 3 est une vue en perspective d'une porte pivotante du côté de caisse du véhicule selon le mode de réalisation.
La figure 4 est une vue de détail en perspective d'un moyen de coopération de la porte coulissante selon le mode de réalisation.
La figure 5 est une vue de détail en perspective d'un moyen de retenue pour la porte coulissante selon le mode de réalisation.
La figure 6 est une vue en coupe partielle selon un plan transversal et longitudinal de la porte pivotante et de la porte coulissante en positions fermées selon le mode de réalisation.
La figure 7 est une vue en perspective du moyen de coopération de la porte coulissante et du moyen de retenue de la porte battante selon le mode de réalisation, la porte coulissante arrivant en fin de fermeture.
La figure 8 est une vue en perspective du moyen de coopération de la porte coulissante et du moyen de retenue de la porte battante selon le mode de réalisation, la porte battante arrivant en fin de fermeture.
La figure 9 est une vue en perspective du moyen de coopération de la porte coulissante et du moyen de retenue de la porte battante selon le mode de réalisation lors d'un effort et/ou lors d'un choc appliqué sur la porte coulissante vers l'extérieur.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

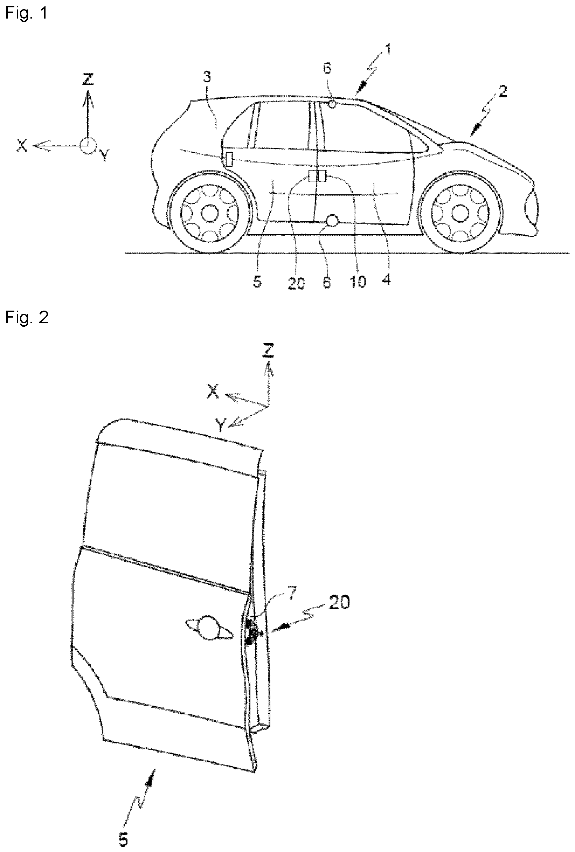

La figure 1 illustre schématiquement un véhicule 1, de préférence un véhicule automobile. Le véhicule 1 comprend une caisse 2. Le véhicule 1 ou la caisse 2 comprend de préférence un côté de caisse côté gauche (non illustré) et un côté de caisse côté droit 3. Le véhicule, la caisse, ou le côté de caisse 3 côté droit, comprend une porte latérale 4 droite et une porte latérale 5 droite. Dans la suite, la porte 4 est agencée à l'avant. La porte 4 est pivotante ou battante. Autrement dit la porte 4 est articulée autour d'un axe vertical ou sensiblement vertical agencé à l'avant de la porte avant 4. Dans la suite, la porte 5 est agencée à l'arrière. La porte 5 est coulissante c'est-à-dire qu'elle coulisse ou coulisse sensiblement vers l'arrière pour s'ouvrir. Comme il sera vu par la suite, la fin de coulissement en fermeture ou le début de coulissement en ouverture de la porte coulissante 5 se font suivant une direction principale D.

Le véhicule 1, ou la caisse 2, ne comprend pas de pied milieu, aussi appelé pied B, entre la porte avant 4 et la porte arrière 5 du côté de caisse 3.

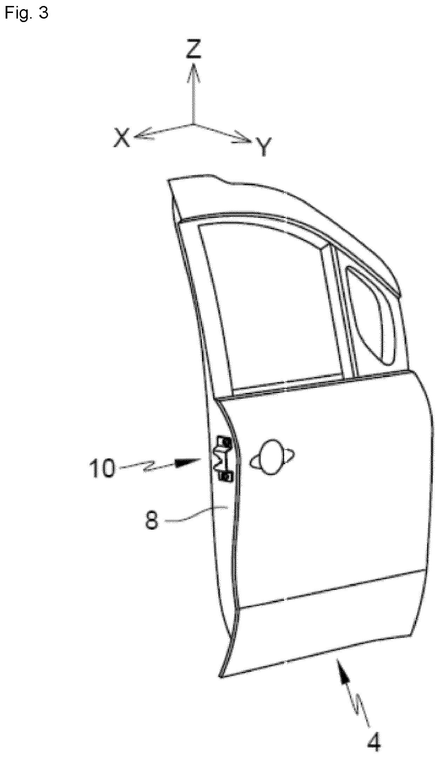

Comme illustré sur la figure 3, la porte pivotante 4 comprend une feuillure 8 agencée à l'arrière de la porte 4. La feuillure 8 s'étend sensiblement transversalement et verticalement en position fermée de la porte 4. Comme illustré sur la figure 2, la porte coulissante 5 comprend une feuillure 7 agencée à l'avant de la porte 5. La feuillure 7 s'étend sensiblement transversalement et verticalement en position fermée de la porte 5. Ainsi, lorsque les deux portes 4, 5 sont fermées, les feuillures 7, 8 sont agencées en vis-à-vis ou sensiblement en vis-à-vis, notamment du fait de l'absence de pied milieu au niveau de la jonction entre ces deux portes 4, 5. Autrement dit, l'avant de la porte arrière 5 jouxte l'arrière de la porte avant 4 en position fermée des portes 4, 5.

A noter que de préférence la porte pivotante 4 comprenant des moyens de maintien 6 en position fermée par rapport au côté de caisse 3. Par exemple, comme illustré schématiquement sur la figure 1, un moyen de maintien assure un maintien en position fermée de la porte avant 4 par rapport au côté de caisse au-dessus de la porte 4. Par exemple, un autre moyen de maintien assure un maintien en position fermée de la porte avant 4 par rapport au côté de caisse au-dessous de la porte 4. D'autres moyens de maintien de la porte avant battante en position fermée peuvent être prévus.

Plus précisément, comme illustré sur les figures 3, 5 et 6, la porte pivotante 4 comprend un moyen de retenue 10 de la porte coulissante 5.

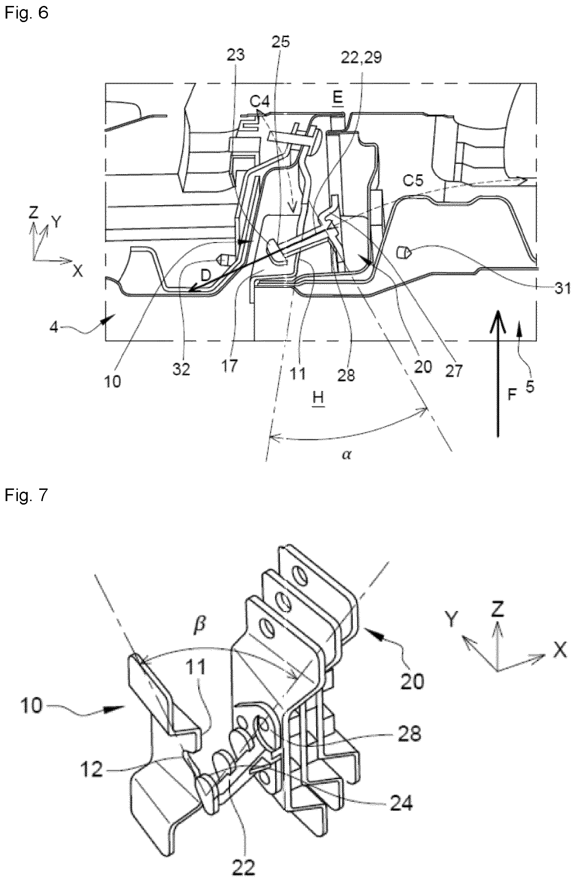

Plus précisément, comme illustré sur les figures 2, 4 et 6, la porte coulissante 5 comprend un moyen de coopération 20 destiné à coopérer avec le moyen de retenue 10 en cas d'effort F (figure 6) et/ou en cas de choc F transversal sur la porte coulissante 5 depuis l'intérieur du véhicule vers l'extérieur. Par choc ou effort transversal F, on entend un choc ou plusieurs chocs ou un effort ou plusieurs efforts dirigés de l'intérieur du véhicule ou habitacle H vers l'extérieur E du véhicule selon l'axe transversal Y ou sensiblement parallèlement à l'axe transversal Y.

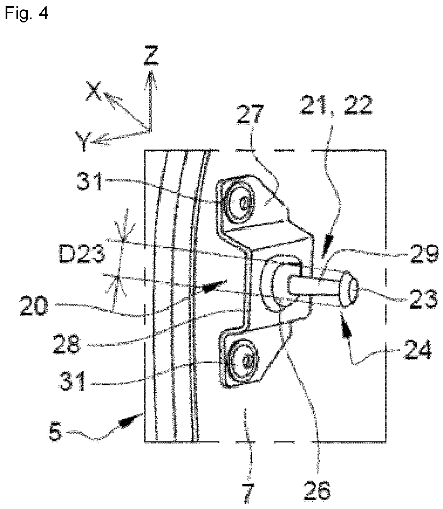

De préférence, le moyen de coopération 20 comprend une extension 21 s'étendant selon la direction principale D ou sensiblement selon la direction principale D. Pour rappel, comme illustré sur la figure 6, la porte coulissante 5 coulisse selon la direction principale D en fin de fermeture, et, de préférence, en début d'ouverture. De manière générale, la direction principale D s'étend dans un plan longitudinal et transversal (c'est-à-dire sensiblement parallèle au sol) et est dirigée vers l'avant et vers l'intérieur du véhicule. Avantageusement, l'extension 21 comprend un doigt 22 cylindrique, ou sensiblement cylindrique. Comme illustré en particulier sur les figures 4 et 6, le doigt 22 est muni d'une tige 29 et d'un épaulement 23 au niveau d'une extrémité distale 24. Ainsi, de préférence, le doigt 22 comprend l'épaulement formé par, ou au niveau de, la tête du doigt 22. Par exemple, l'épaulement 23 peut présenter un arrondi au niveau de l'extrémité distale 24 du doigt. Avantageusement, l'épaulement 23 présente un angle droit 25 ou sensiblement un angle droit par rapport à la tige 29, comme illustré sur la figure 6, de sorte à venir s'accrocher de manière optimale dans la pièce de retenue 10 comme il sera expliqué par la suite.

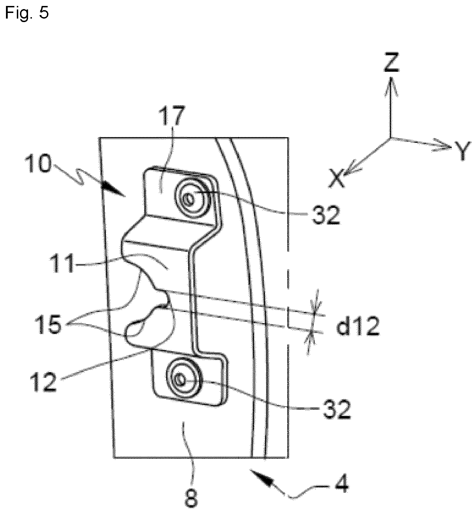

Comme illustré en particulier sur la figure 5, le moyen de retenue 10 comprend une première échancrure 12. Par exemple, la première échancrure 12 est arrondie. Le diamètre d12 de l'échancrure 12 est alors inférieur au diamètre externe D23 de l'épaulement 23 du doigt 22 (figure 4). Le diamètre d12 de l'échancrure 12 est de préférence supérieur au diamètre de la tige 29 de telle sorte que la tige 29 puisse évoluer librement le long de l'échancrure 12.

Selon l'invention, la tige est de forme sensiblement conique. De préférence, la section du cône de la tige du côté de la feuillure 7 a un diamètre inférieur au diamètre de la première échancrure et la section du cône de la tige du côté de l'extrémité distale a un diamètre légèrement supérieur au diamètre de la première échancrure. Ainsi, en cas de choc et/ou effort F, la tige est progressivement freinée lors de son déplacement au sein de l'encoche 12 avant même que l'épaulement 23 n'entre en contact avec le moyen de retenue 10.

Avantageusement, comme illustré sur la figure 5, le moyen de retenue 10 comprend une deuxième échancrure 15. Par exemple, la deuxième échancrure 15 est arrondie et a une forme de demi-disque ou sensiblement de demi-disque comme illustré sur la figure 5. La deuxième échancrure 15 en forme de demi-disque a son diamètre ouvert du côté de l'habitacle H en position fermée de la porte 4. La deuxième échancrure en demi-disque débouche dans la première échancrure 12.

Alternativement, la deuxième échancrure a une forme de V ou sensiblement une forme de V (non illustré). Un tel V est alors ouvert du côté de l'habitacle en position fermée de la porte 4 et vient déboucher au niveau du diamètre d12 de la première échancrure 12. Ainsi la pointe du V comprend une largeur égale ou supérieure à la valeur du diamètre d12.

Comme vu précédemment, la porte coulissante 5 comprend la feuillure 7 s'étendant sensiblement transversalement et verticalement en position fermée de la porte coulissante 5. De préférence, comme illustré sur la figure 4, le moyen de coopération 20 comprend une platine de fixation 27 fixée par rapport à, ou sur, la feuillure 7. Par exemple, comme illustré sur la figure 4, la platine de fixation 27 est une plaque rectangulaire pliée, conformée, en oméga ou sensiblement en oméga. De préférence, deux trous ou lumières sont ménagées au sein de la platine de fixation 27, de préférence au niveau d'une portion de la platine 27 venant au contact de la feuillure 7, ce qui permet sa fixation sur la feuillure 7 par au moins deux vis 31. Par exemple au moins deux écrous rapportés, par exemple fixés sur une plaque commune elle-même fixée sur la feuillure (non illustrés) ou au moins deux taraudages sont prévus derrière la feuillure 7 de sorte à coopérer avec les vis 31. Selon le mode de fabrication retenu pour la fixation du doigt 22 sur la platine 27, un bourrelet 26 peut être prévu (illustré sur la figure 4).

Avantageusement, la platine de fixation 27 comprend une face 28, notamment une face plane ou sensiblement plane, depuis laquelle s'étend le doigt 22. Par exemple, la face 28 peut s'étendre perpendiculairement, ou sensiblement perpendiculairement, par rapport à la direction principale D de coulissement de la porte coulissante 5 en fin de fermeture, ou en début d'ouverture, comme illustré sur la figure 6. Cela permet de placer la base de la tige 29 au plus près du moyen de retenue 10. L'orientation de la tige 29 est préférentiellement disposée selon la direction principale D pour créer cette proximité, quelle que soit finalement la position prise de la face 28 par rapport à la direction principale D.

Comme vu précédemment, la porte pivotante 4 comprend la feuillure 8 s'étendant sensiblement transversalement et verticalement en position fermée de la porte pivotante 4. De préférence, comme illustré sur la figure 5, le moyen de retenue 10 comprend une patte 17 fixée par rapport à, ou sur, la feuillure 8. Par exemple, comme illustré sur la figure 5, la patte 17 est une plaque rectangulaire pliée, conformée, en oméga ou sensiblement en oméga. De préférence, deux trous ou lumières sont ménagées au sein de la patte 17 ce qui permet sa fixation sur la feuillure 8 par deux vis 32. Par exemple deux écrous rapportés, par exemple fixés sur une plaque commune elle-même fixée sur la feuillure (non illustrés) ou deux taraudages sont prévus derrière la feuillure 8 de sorte à coopérer avec les vis 32.

Avantageusement, la patte 17 comprend une partie plane 11 dans laquelle est ménagée la première échancrure 12, la partie plane 11 s'étendant transversalement ou sensiblement transversalement et verticalement ou sensiblement verticalement en position fermée de la porte pivotante 4, comme illustré sur la figure 6. En cas de deuxième échancrure 15 vu précédemment, de préférence, cette deuxième échancrure est également ménagée dans la partie plane 11.

Quoi qu'il en soit, en conditions normales (sans choc ou effort F provenant de l'intérieur du véhicule) la forme du doigt 22 avec son épaulement 23 et la forme de la partie plane 11 comprenant les première et deuxième échancrures 12, 15 sont prévues pour ne pas interférer entre elles lors des ouvertures/fermetures des portes 4, 5, même lorsque l'une d'elle reste fermée. En effet, un jeu suffisant subsiste entre le doigt 22 et son épaulement 23 de la platine 27 et les échancrures 12, 15 de la patte 17.

Avantageusement, comme illustré sur la figure 6, en position fermée des portes 4, 5, la partie plane 11 de la patte 17 du moyen de retenue 10 et la face 28 de la platine de fixation 27 du moyen de coopération 20 forment un angle α. Par exemple, l'angle α peut être compris entre 20 degrés et 60 degrés. Cet angle α s'entend en position fermée des portes 4,5, en l'absence d'effort et en l'absence de choc sur la porte coulissante 5, aussi bien depuis l'intérieur H du véhicule que depuis l'extérieur E du véhicule.

De préférence, le moyen de retenue 10 et le moyen de coopération 20 sont en acier. Par exemple, la platine 27 et/ou la patte 17 sont en tôle d'épaisseur comprise entre 1.5 mm et 4.5 mm, notamment de l'ordre de 3 mm. Par exemple le doigt 22 peut être soudé directement sur la platine de fixation 27. Selon une variante de réalisation, il peut être serti sur la platine de fixation 27. Selon une autre variante de réalisation, il peut être vissé à la platine de fixation 27 par l'intermédiaire d'une plaque d'interfaçage.

Grâce à la solution, en cas de choc et/ou d'effort F provenant de l'intérieur du véhicule et dirigé transversalement ou sensiblement transversalement sur la porte 5 coulissante, la porte 5 est retenue par la porte 4 battante. Pour rappel, en position fermée de la porte battante 4, les moyens de maintien 6 agissent pour la maintenir rigidement fermée par rapport au côté de caisse 3 et/ou à la caisse 2. Ainsi, la porte battante 4 demeure fixe ou sensiblement fixe par rapport au côté de caisse 3 même en cas d'effort et/ou choc venant impacter la porte 4, en particulier d'effort venant de l'intérieur du véhicule et dirigé vers l'extérieur.

En cas d'un déplacement forcé transversal de la porte latérale coulissante vers l'extérieur, depuis sa position de fermeture jusqu'à une position enfoncée vers l'extérieur, le doigt 22 est entraîné transversalement vers une position de sécurité dans laquelle l'épaulement ou pied 23 du doigt 22 vient en butée transversale dans la première échancrure ou logement 12 aménagée dans la pièce d'accueil de type patte 17 de sorte à empêcher le déplacement de la porte 5 vers l'extérieur.

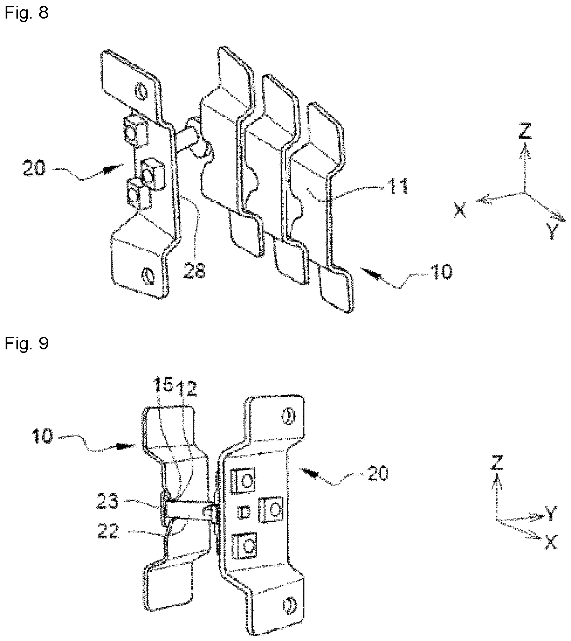

Autrement dit, en cas d'effort et/ou en cas de choc F dirigé sensiblement transversalement depuis l'habitacle vers l'extérieur sur la porte coulissante 5, le doigt ou pion de retenue 22 du moyen de coopération 20 de la porte 5 vient se bloquer dans la première échancrure 12 du moyen de retenue 10 de la porte 4. En outre, du fait de la présence de l'épaulement 23 de diamètre externe D23 supérieur au diamètre d12 de la première échancrure 12, l'épaulement 23 se bloque derrière la première échancrure 12. Il en résulte que la porte coulissante 5 ne peut pas s'ouvrir, ou tout du moins ne s'ouvrir que de quelques millimètres, éventuellement de quelques centimètres au niveau de sa feuillure avant 7. De préférence, le diamètre de la tige 29 du doigt 22 est inférieur, ou tout juste inférieur, au diamètre de l'arrondi de la première échancrure 12. Pour rappel, même en cas de déplacement vertical vers le haut ou vers le bas de la porte coulissante 5 en réponse au choc et/ou à l'effort, le doigt 22 se retrouve guidé selon la direction verticale par la deuxième échancrure 15 et la translation de la porte 5 selon la direction transversale due à l'effort et/ou au choc engendre le coincement du doigt 22 dans la première échancrure 12 au final. Grâce à l'angle α entre la face 28 de la platine de fixation 27 du moyen de coopération et la partie plane 11 de la patte 17 du moyen de retenue 10, tout contact ou interférence est évité entre la face 28 et la partie plane 11 lors de l'ouverture, ou de la fermeture de la porte coulissante 5 (illustré sur la figure 7) même si la porte battante 4 demeure fermée. En outre, l'angle α permet d'éviter tout contact ou interférence entre la face 28 et la partie plane 11 lors de l'ouverture, ou de la fermeture de la porte battante 4 (illustré sur la figure 8) même si la porte coulissante 5 demeure fermée. Autrement dit, les cinématiques d'ouverture et de fermeture des portes, en particulier les cinématiques C4, C5 (doubles flèches en pointillés sur la figure 6) de début d'ouverture et de fin de fermeture des portes 4, 5, ne sont aucunement impactées par les moyens de coopération et de retenue 10, 20.

Autrement dit, en cas d'effort et/ou en cas de choc déplaçant la porte arrière 5 transversalement vers l'extérieur du véhicule 1, le doigt 22 vient se coincer, crocheter, la première échancrure 12, comme illustré sur la figure 9. Comme vu précédemment, en cas de déplacement de la porte 5 dans la direction verticale vers le bas et/ou vers le haut au cours de cet effort et/ou de ce choc, l'extension 21 est guidée par la deuxième échancrure 15 selon la direction verticale ce qui contraint l'extension 21 à venir coopérer dans la première échancrure 12. Plus précisément, lors d'un choc et/ou un effort F suffisant, la tige 29 du doigt 22 se coince et coulisse dans la première échancrure 12 jusqu'à ce que l'épaulement 23 vienne buter contre l'échancrure 12 du fait de la différence de diamètre entre l'épaulement et l'échancrure 12. L'angle droit 25 au niveau de l'épaulement permet d'éviter au maximum que le doigt quitte la première échancrure en fin de coulissement. Ainsi, il convient d'éviter la présence d'un chanfrein entre la tige et l'épaulement.

Alternativement, pour maximiser la prise entre le doigt et la première échancrure, comme illustré sur la figure 7, la tête du doigt peut être dépourvue d'épaulement cylindrique et avoir une forme s'étendant principalement vers l'extérieur E. Dans ce cas, la tête ou extrémité distale 24 peut s'étendre selon la direction transversale en position fermée de la porte 5 et former un angle β inférieur à 90 degrés par rapport à la première direction D selon laquelle s'étend le doigt 22.

Bien que seul le côté droit ait été illustré, de préférence le véhicule 1 ou la caisse 2 ou le côté de caisse côté gauche comprend une porte latérale avant gauche et une porte latérale arrière gauche. Par exemple, la porte latérale avant gauche est pivotante et la porte latérale arrière gauche est coulissante. Dans un tel cas, un moyen de retenue est agencé sur la porte avant gauche et un moyen de coopération est agencé sur la porte arrière gauche. En cas de choc et/ou en cas d'effort depuis l'intérieur vers l'extérieur sur la porte arrière gauche, les moyens de retenue et de coopération coopèrent l'un avec l'autre, à l'instar du côté droit vu ci-dessus.

En résumé, le véhicule 1 dispose d'un vaste accès latéral au sein de l'habitacle et par conséquent d'une large issue pour en sortir tout en satisfaisant la règlementation et/ou les normes en termes de sécurité concernant notamment la porte arrière coulissante. En effet, comme vu précédemment, la solution s'oppose à l'ouverture intempestive en cas de chocs et/ou en cas d'efforts transversaux provenant de l'intérieur du véhicule sur la porte coulissante. Ainsi, en cas d'efforts et/ou en cas de chocs sur la porte coulissante provenant par exemple d'un ou plusieurs objets qui basculent et/ou roulent et/ou pivotent et/ou tombent et/ou sont projetés, ou encore dus à des mouvements de passagers arrière soumis à des forces centrifuges ou des accélérations, la porte coulissante demeure fermée, ou sensiblement fermée, en étant retenue par le moyen de retenue de la porte avant. Autrement dit, la solution permet de satisfaire les exigences règlementaires en termes de rétention de porte coulissante, notamment en cas d'accident. En effet, la porte arrière coulissante ne s'échappe pas ou peu en cas de choc ou efforts provenant de l'intérieur du véhicule.

La solution est compatible avec les cinématiques d'ouverture et de fermeture des portes et n'empiète pas sur l'espace d'accès / sortie du véhicule. Cela est particulièrement remarquable pour une porte avant battante et une porte arrière coulissante, d'autant que la caisse ne dispose pas de pied milieu entre les deux.

La solution est peu onéreuse car le moyen de retenue et le moyen de coopération sont faciles à fabriquer.

En cas de moyen de retenue 10 et de moyen de coopération 20 rapportés respectivement sur la porte battante 4 avant et sur la porte coulissante 5 arrière, il peut être évité de créer des trous dans les portes ce qui permet d'éviter de fragiliser les portes dans ces zones de fixation.

En remarque, la solution atteint donc l'objectif recherché de fournir un côté de caisse équipé d'une porte battante avant et d'une porte coulissante arrière, sans pied milieu, tout en satisfaisant la réglementation, et présente les avantages suivants :
- elle est économique,
- elle peut être utilisée sur tous types de véhicules disposant d'une porte coulissante, en particulier les véhicules utilitaires.

## Revendications

1. Côté de caisse (3) pour un véhicule (1), notamment un véhicule automobile, comprenant :
- une porte pivotante (4), la porte pivotante (4) comprenant des moyens de maintien (6) en position fermée par rapport au côté de caisse (3),
- une porte coulissante (5) ou sensiblement coulissante selon une direction principale (D) en fin de fermeture,
les portes coulissante et pivotante (4,5) se jouxtant l'une par rapport à l'autre en position fermée des portes, où:
- la porte pivotante (4) comprend un moyen de retenue (10) de la porte coulissante (5),
- la porte coulissante (5) comprend un moyen de coopération (20) avec le moyen de retenue (10) en cas d'effort et/ou en cas de choc transversal sur la porte coulissante (5) depuis l'intérieur d'un tel véhicule vers l'extérieur, le moyen de coopération (20) comprenant une extension (21) s'étendant selon la direction principale (D) ou sensiblement selon la direction principale (D),
l'extension (21) comprenant un doigt (22) muni d'une tige (29) et d'un épaulement (23) au niveau d'une extrémité distale (24), notamment muni d'un épaulement formé par une tête du doigt (22),
**caractérisé en ce que** la tige (29) est sensiblement conique.

2. Côté de caisse (3) selon la revendication 1, **caractérisé en ce que** le moyen de retenue (10) comprend une première échancrure (12), notamment une première échancrure (12) arrondie.

3. Côté de caisse (3) selon la revendication précédente, **caractérisé en ce que** la première échancrure (12) arrondie de diamètre inférieur au diamètre de l'épaulement (23) du doigt (22).

4. Côté de caisse (3) selon l'une des revendications 2 ou 3, **caractérisé en ce que** le moyen de retenue (10) comprend une deuxième échancrure (15), notamment arrondie, destinée à guider le doigt (22) au sein de la première échancrure (12) en cas d'effort et/ou en cas de choc sur la porte coulissante (5) depuis l'intérieur vers l'extérieur.

5. Côté de caisse (3) selon l'une des revendications 2 à 4, **caractérisé en ce que** la porte coulissante (5) comprend une feuillure (7) s'étendant sensiblement transversalement et verticalement en position fermée de la porte coulissante (5) et **en ce que** le moyen de coopération (20) comprend une platine de fixation (27) fixée par rapport à la feuillure (7), la platine de fixation (27) comprenant une face (28) depuis laquelle s'étend le doigt (22), la face (28) s'étendant de manière sensiblement inclinée par rapport à une portion de la platine de fixation (27) fixée à la feuillure (7).

6. Côté de caisse (3) selon l'une des revendications 2 à 5, **caractérisé en ce que** la porte pivotante (4) comprend une feuillure (8) s'étendant sensiblement transversalement et verticalement en position fermée de la porte pivotante (4) et **en ce que** le moyen de retenue (10) comprend une patte (17) fixée par rapport à la feuillure (8), la patte (17) comprenant une partie plane (11) dans laquelle est ménagée la première échancrure (12), la partie plane (11) s'étendant transversalement ou sensiblement transversalement et verticalement ou sensiblement verticalement en position fermée de la porte pivotante (4).

7. Côté de caisse (3) selon les revendications 5 et 6, **caractérisé en ce que** la partie plane (11) de la patte (17) du moyen de retenue (10) et la face (28) de la platine de fixation (27) du moyen de coopération (20) forment un angle (α), notamment compris entre 20 degrés et 60 degrés en position fermée des portes (4,5) en l'absence d'effort et/ou de choc dirigé vers l'extérieur sur la porte coulissante (5).

8. Caisse (2) de véhicule, notamment de véhicule automobile, **caractérisée en ce qu'**elle comprend un côté de caisse (3) selon l'une des revendications précédentes du côté droit et/ou du côté gauche.

9. Véhicule (1), notamment véhicule automobile, **caractérisé en ce qu'**il comprend une caisse (2) selon la revendication précédente, ou au moins un côté de caisse (3) selon l'une des revendications 1 à 7.

## Patentansprüche

1. Karosserieseite (3) für ein Fahrzeug (1), insbesondere ein Kraftfahrzeug, umfassend:
- eine Schwenktür (4), die wobei die Schwenktür (4) Haltemittel (6) zum Halten in geschlossener Stellung in Bezug auf die Karosserieseite (3) umfasst,
- eine Schiebetür (5) oder im Wesentlichen am Ende des Schließens entlang einer Hauptrichtung (D) verschiebbare Tür,
wobei die Schiebe- und die Schwenktür (4,5) in der geschlossenen Stellung der Türen aneinander angrenzen; wobei:
- die Schwenktür (4) ein Rückhaltemittel (10) für die Schiebetür (5) umfasst;
- die Schiebetür (5) ein Zusammenwirkmittel (20) zum Zusammenwirken mit dem Rückhaltemittel (10) im Fall einer Kraft und/oder im Fall eines Queraufpralls auf die Schiebetür (5) vom Innenraum eines solchen Fahrzeugs nach außen umfasst, wobei das Zusammenwirkmittel (20) eine Verlängerung (21) umfasst, die sich entlang der Hauptrichtung (D) oder im Wesentlichen entlang der Hauptrichtung (D) erstreckt;
wobei die Verlängerung (21) einen Finger (22) umfasst, der mit einem Schaft (29) und einer Schulter (23) an einem distalen Ende (24) versehen ist, insbesondere mit einer Schulter versehen ist, die durch einen Kopf des Fingers (22) gebildet wird;
**dadurch gekennzeichnet, dass** der Schaft (29) im Wesentlichen konisch ist.

2. Karosserieseite (3) nach Anspruch 1, **dadurch gekennzeichnet, dass** das Rückhaltemittel (10) einen ersten Ausschnitt (12) umfasst, insbesondere einen gerundeten ersten Ausschnitt (12).

3. Karosserieseite (3) nach dem vorhergehenden Anspruch, **dadurch gekennzeichnet, dass** der gerundete erste Ausschnitt (12) einen geringeren Durchmesser als der Durchmesser der Schulter (23) des Fingers (22).

4. Karosserieseite (3) nach einem der Ansprüche 2 oder 3, **dadurch gekennzeichnet, dass** das Rückhaltemittel (10) einen, insbesondere gerundeten, zweiten Ausschnitt (15) umfasst, der dazu bestimmt ist, den Finger (22) im Fall einer Kraft und/oder im Fall eines Aufpralls auf die Schiebetür (5) vom Innenraum nach außen in den ersten Ausschnitt (12) zu führen.

5. Karosserieseite (3) nach einem der Ansprüche 2 bis 4, **dadurch gekennzeichnet, dass** die Schiebetür (5) einen Falz (7) umfasst, der sich in der geschlossenen Stellung der Schiebetür (5) im Wesentlichen quer und vertikal erstreckt, und dass das Zusammenwirkmittel (20) eine Befestigungsplatte (27) umfasst, die in Bezug auf den Falz (7) befestigt ist, wobei die Befestigungsplatte (27) eine Fläche (28) umfasst, von der aus sich der Finger (22) erstreckt, wobei sich die Fläche (28) in Bezug auf einen Abschnitt der Befestigungsplatte (27), der an dem Falz (7) befestigt ist, im Wesentlichen geneigt erstreckt.

6. Karosserieseite (3) nach einem der Ansprüche 2 bis 5, **dadurch gekennzeichnet, dass** die Schwenktür (4) einen Falz (8) umfasst, der sich in der geschlossenen Stellung der Schwenktür (4) im Wesentlichen quer und vertikal erstreckt, und dass das Rückhaltemittel (10) eine Lasche (17) umfasst, die in Bezug auf den Falz (8) befestigt ist, wobei die Lasche (17) einen ebenen Teil (11) umfasst, in dem der erste Ausschnitt (12) ausgebildet ist, wobei sich der ebene Teil (11) in der geschlossenen Stellung der Schwenktür (4) quer oder im Wesentlichen quer und vertikal oder im Wesentlichen vertikal erstreckt.

7. Karosserieseite (3) nach den Ansprüchen 5 und 6, **dadurch gekennzeichnet, dass** der ebene Teil (11) der Lasche (17) des Rückhaltemittels (10) und die Fläche (28) der Befestigungsplatte (27) des Zusammenwirkmittels (20) in der geschlossenen Stellung der Türen (4,5) bei Nichtvorliegen einer Kraft und/oder eines Aufpralls auf die Schiebetür (5), die bzw. der nach außen gerichtet ist, einen Winkel (α) von insbesondere zwischen 20 Grad und 60 Grad bilden.

8. Karosserie (2) eines Fahrzeugs, insbesondere eines Kraftfahrzeugs, **dadurch gekennzeichnet, dass** sie eine Karosserieseite (3) nach einem der vorhergehenden Ansprüche auf der rechten Seite und/oder auf der linken Seite umfasst.

9. Fahrzeug (1), insbesondere Kraftfahrzeug, **dadurch gekennzeichnet, dass** es eine Karosserie (2) nach dem vorhergehenden Anspruch oder eine Karosserieseite (3) nach einem der Ansprüche 1 bis 7 umfasst.

## Claims

1. Body side (3) for a vehicle (1), in particular a motor vehicle, comprising:
- a pivoting door (4), the pivoting door (4) comprising means (6) for holding in the closed position with respect to the body side (3),
- a sliding door (5) sliding or substantially sliding in a main direction (D) at the end of closure,
the sliding and pivoting doors (4, 5) being adjacent to each other in the closed position of the doors, wherein:
- the pivoting door (4) comprises a retaining means (10) for retaining the sliding door (5),
- the sliding door (5) comprises a means (20) of cooperation with the retaining means (10) in the event of a force and/or in the event of a transverse impact on the sliding door (5) from the inside of such a vehicle towards the outside, the cooperation means (20) comprising an extension (21) extending in the main direction (D) or substantially in the main direction (D), the extension (21) comprising a finger (22) provided with a stem (29) and with a shoulder (23) at a distal end (24), in particular provided with a shoulder formed by a head of the finger (22),
**characterized in that** the stem (29) is substantially conical.

2. Body side (3) according to Claim 1, **characterized in that** the retaining means (10) comprises a first notch (12), in particular a first rounded notch (12).

3. Body side (3) according to the preceding claim, **characterized in that** the first rounded notch (12) has a diameter smaller than the diameter of the shoulder (23) of the finger (22).

4. Body side (3) according to either of Claims 2 and 3, **characterized in that** the retaining means (10) comprises a second, in particular rounded, notch (15) intended to guide the finger (22) within the first notch (12) in the event of a force and/or in the event of an impact on the sliding door (5) from the inside towards the outside.

5. Body side (3) according to one of Claims 2 to 4, **characterized in that** the sliding door (5) comprises a rebate (7) extending substantially transversely and vertically in the closed position of the sliding door (5), and **in that** the cooperation means (20) comprises a fastening plate (27) fastened with respect to the rebate (7), the fastening plate (27) comprising a face (28) from which the finger (22) extends, the face (28) extending in a substantially inclined manner with respect to a portion of the fastening plate (27) fastened to the rebate (7).

6. Body side (3) according to one of Claims 2 to 5, **characterized in that** the pivoting door (4) comprises a rebate (8) extending substantially transversely and vertically in the closed position of the pivoting door (4), and **in that** the retaining means (10) comprises a tab (17) fastened with respect to the rebate (8), the tab (17) comprising a planar part (11) in which the first notch (12) is formed, the planar part (11) extending transversely or substantially transversely and vertically or substantially vertically in the closed position of the pivoting door (4).

7. Body side (3) according to Claims 5 and 6, **characterized in that** the planar part (11) of the tab (17) of the retaining means (10) and the face (28) of the fastening plate (27) of the cooperation means (20) form an angle (a), in particular between 20 degrees and 60 degrees in the closed position of the doors (4, 5) in the absence of an outwardly directed force and/or impact on the sliding door (5).

8. Vehicle body (2), in particular a motor vehicle body, **characterized in that** it comprises a body side (3) according to one of the preceding claims on the righthand side and/or on the left-hand side.

9. Vehicle (1), in particular a motor vehicle, **characterized in that** it comprises a body (2) according to the preceding claim, or at least one body side (3) according to one of Claims 1 to 7.
